# EUROPÄISCHE PATENTSCHRIFT

(11) **EP 3 959 850 B1**
(45) Veröffentlichungstag und Bekanntmachung des Hinweises auf die Patenterteilung: **27.12.2023**
(21) Anmeldenummer: 19720559.4
(22) Anmeldetag: 26.04.2019
(51) Int. Cl.: H04L 67/02, H04L 65/1069, H04L 65/1053

(54) **VERFAHREN ZUM BEREITSTELLEN VON VERBINDUNGSHERSTELLUNGSDATEN SOWIE ANORDNUNG MIT EINER MEHRZAHL VON KOMMUNIKATIONSSERVERN UND EINEM VERMITTLER**
METHOD FOR PROVIDING CONNECTION SET-UP DATA, AND ARRANGEMENT HAVING A PLURALITY OF COMMUNICATION SERVERS AND A MEDIATOR
PROCÉDÉ DE FOURNITURE DE DONNÉES D'ÉTABLISSEMENT DE CONNEXION AINSI QU'ENSEMBLE COMPRENANT UNE PLURALITÉ DE SERVEURS DE COMMUNICATION ET UN INTERMÉDIAIRE

(43) Veröffentlichungstag der Anmeldung: 02.03.2022
(73) Patentinhaber: Unify Patente GmbH & Co. KG, 81739 München (DE)
(72) Erfinder: RIST, Claus, 44797 Bochum (DE); SCHWARTZE, Jürgen, 58239 Schwerte (DE)
(74) Vertreter: Schaafhausen Patentanwälte PartGmbB
(86) Internationale Anmeldenummer: PCT/EP2019/060796
(87) Internationale Veröffentlichungsnummer: WO 2020/216454

(56) Entgegenhaltungen:
- DE-A1-102007 046 627
- US-B2- 8 208 412

## Beschreibung

### Gebiet der Erfindung

Die Erfindung betrifft ein Verfahren zum Bereitstellen von Verbindungsherstellungsdaten in einem vorbestimmten Umfeld sowie eine Anordnung mit einer Mehrzahl von Kommunikationsservern und einem Vermittler, letzterer typischerweise "Load Balancer" genannt.

### Stand der Technik

Die DE 10 2007 046 627 A1 offenbart Verfahren und Vorrichtungen zum Organisieren von Internet-Kommunikationsvorgängen unter Nutzung einer dynamischen STUN-Infrastrukturkonfiguration (DSIC). Ein DSIC-Server organisiert Kommunikationen über das Internet durch Empfangen einer Registrierungsanforderung von einem Client, Instruieren des Client, eine Erkennungsprozedur auszuführen, beispielsweise eine STUN-Erkennung, um die NAT zu bewerten, hinter der sich der Client befindet, Empfangen von Ergebnissen der Erkennungsprozedur, Verarbeiten der Ergebnisse der Erkennungsprozedur, um die NAT zu bewerten, hinter der sich der Client befindet, und Instruieren des Client, nur dann einen Session Border Controller zu nutzen, wenn die NAT ein oder mehrere vorgegebene Kriterien erfüllt. Ein DSIC-Client registriert sich bei dem DSIC-Server, empfängt die Anweisung, eine Erkennungsprozedur auszuführen, führt die Erkennungsprozedur aus, stellt dem DSIC-Server die Ergebnisse der Erkennungsprozedur bereit und erhält einen zugeordneten Session Border Controller für SIP-Kommunikationen nur dann, wenn die NAT ein oder mehrere vorgegebene Kriterien erfüllt.

Die US 8,208,412 B2 offenbart eine Lösung für das Problem der Netzwerkadressübersetzung (NAT) für das Echtzeitprotokoll (RTP), bei der ein RTP-Proxy (z. B. ein Session Border Controller (SBC)) verwendet wird, der nicht logisch zwischen dem NAT und dem Feature Server (FS) liegt, sondern bei Geräten, die ein vom SBC nicht unterstütztes Protokoll verwenden, diese Geräte zunächst dem Feature Server signalisieren, der bestimmt, ob und wie ein RTP-Proxy aufgerufen werden soll. Ein RTP-Proxy sollte vom FS aufgerufen werden, wenn sich beide Endpunkte (z. B. Geräte) hinter verschiedenen NATs befinden (oder einer der Endpunkte sich hinter einem NAT befindet und der andere nicht) und keiner der Endpunkte bereits über einen RTP-Proxy signalisiert wird. Der SBC ist beispielsweise (zumindest logisch) zwischen dem Feature Server und anderen gemeinsam genutzten Komponenten eingefügt.

Zum vorliegenden Zeitpunkt sind Systeme auf dem Markt, die mehrere Möglichkeiten der Kommunikation in Echtzeit miteinander vereinen, insbesondere verknüpfen. Beispielhaft genannt sei hier das System "Circuit" der Firma Unify GmbH & Co. KG, wozu Informationen beispielsweise am 12. März 2019 erhältlich waren unter: https://www.circuit.com. "Circuit" ermöglicht es, eine klassische Telefonie mit der Videodatenübertragung zu vereinen und zugleich Daten auf einem Bildschirm eines Personalcomputers einzukoppeln und dergleichen. Die sogenannten "Circuit"-Clients können daher sowohl Telefone als auch Personalcomputer oder Notebooks sein, oder Zwischenformen wie Tablets oder Smartphones.

Mit der zunehmenden Verbreitung des Internets, beispielsweise auch in der Telefonie (Voice over IP, VoIP), hat es sich als wünschenswert gezeigt, auch über das World Wide Web möglichst viele Arten der Kommunikation zu ermöglichen. Im Rahmen der Echtzeitkommunikation bezeichnet man das als Unified Communications-Dienst ("UC-Dienst"). Speziell gibt es auch die "CTI", "Computer Telephony Integration", d. h. die Koordination von Interaktion über Telefon und Computer. Will man diese CTI- und UC-Dienste in das World Wide Web über ein sogenanntes "Web Service Interface", WSI, einkoppeln, stößt man bei vorhandenen Systemen auf Schwierigkeiten. Beispielsweise wäre es wünschenswert, dass das o. g. System "Circuit" (oder ein verwandtes System) die Kommunikationsplattform "OpenScape Business", die ebenfalls von der Firma Unify GmbH & Co. KG bereitgestellt wird, für solche Zwecke einsetzt. Informationen zu "OpenScape Business" waren beispielsweise am 12. März 2019 unter https://wiki.unify.com im Internet zum Stichwort "OpenScape Business" zu finden. Es handelt sich insbesondere um speziell gestaltete Nebenstellenanlagen (PBX oder PABX, "Private Branch Exchange" beziehungsweise "Private Automatic Branch Exchange"). Solche Nebenstellenanlagen werden über eine Firewall bei einem Benutzer, die zugleich die Netzwerkadressübersetzung vornimmt (Network Address Translation, NAT), mit dem Internet verkoppelt. Eine Echtzeitkopplung verschiedener Dienste wird durch den Anbieter (wie eben die Unify GmbH & Co. KG bei "Circuit") durch ein zentrales Datenverarbeitungszentrum bereitgestellt. Über das Internet können Kommunikationspartner einzelne Kommunikationsserver dieses Datenverarbeitungszentrums verwenden. Naturgemäß gibt es als Zwischeninstanz einen Vermittler (den man als "Load Balancer" bezeichnet), der etwa als Session Border Controller, SBC, ausgebildet ist. Bei dem Load Balancer handelt es sich um eine Netzwerkkomponente, die zwischengeschaltet ist, wenn verschiedene Netze mit Computern miteinander gekoppelt werden sollen. SBCs sind aus der VolP-Technologie bekannt. Jede Nebenstellenanlage kennt, wenn "Circuit" aufgerufen wird, die IP-Adresse des Vermittlers (Load Balancers) und ruft diese bei Bedarf auf. Der Load Balancer sucht dann einen Telekommunikationsserver (im Englischen als "Telephony Connector" bezeichnet) aus einer Mehrzahl von solchen Telekommunikationsservern aus, der dann die Datenkapazität für den Kommunikationsvorgang zur Verfügung stellt. Gegebenenfalls kann während der Kommunikation auch der Kommunikationsserver wechseln, genauso auch können einzelne Datenpakete auf verschiedene Telekommunikationsserver während der Kommunikation aufgeteilt werden. Trotz der und gerade wegen der Nutzung des Internets gibt es bisher keine Möglichkeit, die klassischen Internetdienste zusätzlich zu nutzen. Der Grund hierfür ist der dazwischengeschaltete Vermittler. Hier ist von einem Regelfall ausgegangen, bei dem der Load Balancer aus Performance- und Skalierbarkeitsgründen keine sog. Stateful Packet Inspection vornimmt, also nicht Einblick in die Dateninhalte nimmt, oder genauer ausgedrückt, von den protokolltechnischen Inhalten der jeweiligen Verbindung keine Kenntnis hat und über keine Information verfügt oder keine Information heranziehen kann, welche der Load Balancer für Routing-Entscheidungen heranziehen könnte.

### Aufgabe der Erfindung

Es ist die Aufgabe der Erfindung, den Stand der Technik zu erweitern, indem weitere Möglichkeiten geschaffen werden, über das Internet zu kommunizieren, insbesondere CTI- und UC-Dienste bereitzustellen.

### Lösung der Aufgabe

Die Aufgabe wird durch ein Verfahren mit den Merkmalen nach Anspruch 1 und eine Anordnung mit den Merkmalen nach Anspruch 11 gelöst.

Im Einzelnen ist das erfindungsgemäße Verfahren ein solches zum Bereitstellen von Verbindungsherstellungsdaten zwischen einer Nebenstellenanlage (PBX oder PABX) in einem ersten Kommunikationssystem (wie beispielsweise unter Nutzung der Plattform OpenScape Business bereitgestellt), wobei das erste Kommunikationssystem anhand von IP-Adresse mit einem ersten Kommunikationsprotokoll auf Kommunikationspartner zugreift. Der Begriff "IP-Adresse" bedeutet "Internet Protokoll"-Adresse und ist die typische Adresse zur Identifikation von ans Netzwerk angeschlossenen Teilnehmern im World Wide Web. Die Verbindungsherstellung soll zwischen einer solchen Nebenstellenanlage und einem Kommunikationsserver erfolgen, der in einem zweiten Kommunikationssystem vorgesehen ist, das als Dienste-Vereinigungssystem ausgebildet ist (Web RTC, wobei dies für World Wide Web-basierte "Real Time Communication" steht), Der Kommunikationsserver ist nur über die IP-Adresse eines Kommunikationsdaten zuteilenden Vermittlers (Load Balancer, SBC) zugänglich, wobei das Daten-Vereinigungssystem auf Kommunikationspartner anhand von IP-Adressen mit einem von dem ersten Kommunikationsprotokoll verschiedenen zweiten Kommunikationsprotokoll den Kommunikationsserver zugreifbar macht. Bei dem Verfahren sendet die Nebenstellenanlage unter Verwendung des ersten Kommunikationsprotokolls an die erste IP-Adresse eine Anfrage nach einer Verbindung, und der Vermittler stellt die Verbindung zu dem Kommunikationsserver her. Erfindungsgemäß ist vorgesehen, dass der Kommunikationsserver selbst oder der Vermittler (gewissermaßen "namens" des Kommunikationsservers) veranlasst, dass eine IP-Adresse des Kommunikationsservers, die von der IP-Adresse des Vermittlers verschieden ist, der Nebenstellenanlage bekannt wird. Unter "bekannt wird" wird vorliegend verstanden, dass die IP-Adresse entweder unmittelbar übermittelt wird oder aufgrund von anderen bereitgestellten Informationen erschließbar ist. Die Erfindung beinhaltet, dass der Kommunikationsserver überhaupt über eine eigene IP-Adresse verfügt, die gegebenenfalls bei der Ausgestaltung des Dienste-Vereinigungssystems vorzusehen ist. Das Bekanntgeben kann routinemäßig von jedem Kommunikationsserver erfolgen, oder nur dann, wenn ganz bestimmte Arten von Nebenstellenanlagen, die das Verfahren überhaupt erst unterstützen, angekoppelt werden (die IP-Adresse des Vermittlers aufrufen). Im Prinzip kann auch der Vermittler selbst dies veranlassen, ohne dass der Kommunikationsserver ein einziges Bit übermitteln muss. Ferner ist es möglich, dass der Kommunikationsserver eine einfache Botschaft (kurze Flag gesetzt oder dergleichen) an den Vermittler sendet, der dann die komplexe Botschaft (nämlich insbesondere die komplette IP-Adresse) an die Nebenstellenanlage übermittelt.

Vorzugsweise wird zusätzlich zu der IP-Adresse des Kommunikationsservers auch die Information an die Nebenstelle übermittelt, über welchen Server Port des Vermittlungsservers dieser Kommunikationsserver zugänglich ist. Auf diese Weise ist eine parallele Kommunikation, auch über den Vermittler, erleichtert. Dieser Aspekt spielt insbesondere dann eine Rolle, wenn der Kommunikationsserver in Form von Hardware bereitgestellt wird und nicht etwa als Software Plug.

Bei einer weiteren bevorzugten Ausführungsform der Erfindung wird nach Bekanntgabe der IP-Adresse und gegebenenfalls des Server Ports durch die Nebenstellenanlage unter Verwendung des zweiten Kommunikationsprotokolls eine Anfrage an die IP-Adresse des Kommunikationsservers zur Herstellung einer Verbindung gesendet und die Verbindung hergestellt. Auf diese Weise gibt es eine Internet-Verbindung, die Kommunikation mittels des zweiten Kommunikationsprotokolls ermöglicht und die somit parallel zur mittels des ersten Kommunikationsprotokolls erfolgenden Kommunikation, oder diese (zumindest partiell) ersetzend, ablaufen kann.

In einem Aspekt der Erfindung ist vorgesehen, dass nach Abbruch der das erste Kommunikationsprotokoll nutzenden Verbindung und bei Weiterbestehen der das zweite Kommunikationsprotokoll nutzenden Verbindung unter einer vorbestimmten Bedingung eine Wiederherstellung der das erste Kommunikationsprotokoll nutzenden Verbindung erfolgt. Mit anderen Worten ist vorgesehen, dass gerade die zusätzliche Verbindung als Stabilisator in der Kommunikation insofern fungiert, als sie die Hauptverbindung wiederherstellt, wozu (gemäß der vorbestimmten Bedingung) bestimmte Informationen vorhanden sein können, bestimmte Software-Elemente und dergleichen vorhanden sein müssen, so dass der Kommunikationsserver überhaupt in der Lage ist - zumindest im Zusammenwirken mit dem Vermittler - die Verbindung wiederherzustellen.

Dies kann insbesondere über Zahlen erfolgen, die zugeteilt werden (eine "Rufnummer", die von der Nebenstellenanlage oder dem Vermittler wieder aufgerufen wird). Umgekehrt kann der Kommunikationsserver unter vorbestimmten Bedingungen (etwa vorhanden nach Wiederherstellung der Verbindung, wie oben angegeben) auch eine von der IP-Adresse verschiedene zweite Adresse ("Rufnummer") an die Nebenstellenanlage (oder auch den Vermittler) bekanntgeben, um bei Anfrage zu einem späteren Zeitpunkt ein Herstellen einer Verbindung einer Nebenstellenanlage mit direkt genau diesem Kommunikationsserver über den Vermittler erfolgen zu lassen. Auf diese Weise lässt sich die Kommunikation stabil auch über den Vermittler halten oder wiederherstellen, sollte sie unterbrochen sein.

Es gibt grundsätzlich auch andere Arten von Daten, die Auskunft über die Möglichkeiten bei der Kommunikation (z. B. Datenkapazität, Datenübermittlungsgeschwindigkeit etc.) geben, wobei solche Statusdaten idealerweise ebenfalls ausgetauscht werden sollten. Insbesondere können Statusdaten des Kommunikationsservers von dem Kommunikationsserver an die Nebenstellenanlage gesendet werden, Statusdaten des Vermittlers von dem Vermittler an die Nebenstellenanlage gesendet werden und Statusdaten des Kommunikationsservers von dem Vermittler an die Nebenstellenanlage gesendet werden, schließlich auch über einen Austausch von Daten Statusdaten des Vermittlers von dem Kommunikationsserver an die Nebenstellenanlage gesendet werden. Des Weiteren kann auch umgekehrt vorgesehen sein, dass Statusdaten von der Nebenstellenanlage an den Kommunikationsserver entweder direkt oder über den Vermittler gesendet werden oder Statusdaten direkt an den Vermittler von der Nebenstellenanlage gesendet werden, oder auch auf dem Umweg über die zweite Kommunikationsverbindung mit dem Kommunikationsserver an den Vermittler gesendet werden. Damit sind aussagekräftige Fehlermeldungen möglich, also solche, die den Anwendern bei Fehlfunktion sinnvolle Statusmeldungen liefern.

Bei einer bevorzugten Ausführungsform der Erfindung in allen bisher beschriebenen Aspekten ist das erste Kommunikationsprotokoll das Session Initiation Protokoll, SIP. Was somit zunächst hergestellt wird, ist ein sogenannter SIP-Trunk, bei dem die Nebenstellenanlage SIP-Daten bereitstellt. Vorzugsweise werden in einem solchen SIP-Trunk dann Nachrichten von computergeführten Telefonanwendungen (Computer-Supported Telecommunications Applications", CSTA) getunnelt. Unter dem Begriff des "Tunnelns" versteht man im Fachgebiet, dass unter Verwendung eines ersten Protokolls Daten von ganz anderen Systemen aufgenommen werden, die grundsätzlich dem Protokoll fremd wären, die aber durch geeignete Einbettung mit den üblichen Daten zugleich übermittelt werden können, und dies sogar in einer solchen Weise, dass es sich um die hauptsächlich übermittelten Daten handelt.

Bei allen bisher beschriebenen Aspekten der Erfindung ist es besonders vorzugsweise vorgesehen, wenn das zweite Kommunikationsprotokoll das Hypertext Transfer Protocol Secure, HTTPS, ist. Dies ist das im Internet übliche Protokoll für die Grunddienste, die seit jeher im Internet bereitgestellt werden. Auch hier ist vorzugsweise ein Tunneln vorgesehen, es werden nämlich in den HTTPS-Daten Nachrichten des Web Service Interface, WSI, getunnelt. Auf diese Weise wird etwas erzeugt, was man als "WSI-Socket-Verbindung" bezeichnet.

Die erfindungsgemäße Anordnung ist die im Datenverarbeitungszentrum des Dienste-Vereinigungssystems, sie weist also eine Mehrzahl von Kommunikationsservern und einen Vermittler (Load Balancer, insbesondere als SBC ausgestaltet) auf. Über den Vermittler werden gemäß einem ersten Kommunikationsprotokoll (etwa SIP) Kommunikationsserver zugänglich, wobei die Kommunikationsserver bei dem ersten Protokoll ihre IP-Adresse verborgen halten. Erfindungsgemäß ist zumindest ein erster der Kommunikationsserver ausgelegt, seine IP-Adresse für Anwendungen eines von dem ersten Kommunikationsprotokoll verschiedenen zweiten Kommunikationsprotokolls an einen Kommunikationspartner, der auf den Kommunikationsserver über den Vermittler zugreift, bekanntzugeben. Dies kann unmittelbar direkt über eine vom Kommunikationsserver gesendete Nachricht, oder auf Umweg über den Vermittler erfolgen, der eine kurze Nachricht ("Flag gesetzt") in die geeignete lesbare Nachricht wandelt. Alternativ ist unmittelbar der Vermittler ausgelegt, die IP-Adresse des Kommunikationsservers an den Kommunikationspartner bekanntzugeben.

Bei einer bevorzugten Ausführungsform der Anordnung ist der erste Kommunikationsserver ausgelegt, unter Verwendung des zweiten Kommunikationsprotokolls mit dem Kommunikationspartner an dem Vermittler vorbei Daten auszutauschen, vorzugsweise zusätzlich zu über den Vermittler unter Verwendung des ersten Kommunikationsprotokolls übermittelten Daten. Mit anderen Worten erfolgt eine parallele Kommunikation zur optimalen Integration von Diensten. Wie bereits mitgeteilt, ist bei einer bevorzugten Ausführungsform vorgesehen, dass der Vermittler als Load Balancer und besonders vorzugsweise als Session Border Controller ausgelegt ist. Auch hier ist die Protokollzuteilung, wie oben beschrieben, vorzugsweise SIP und HTTPS, mit Tunneln von CSTA bzw. WSI.

### Ausführungsbeispiel für die Erfindung

Nachfolgend wird die Erfindung unter Bezug auf die Zeichnung anhand eines Ausführungsbeispiels näher dargestellt, wobei:
FIG. 1 ein System von Nebenstellenanlagen zeigt, das über das Internet mit einem Daten-Vereinigungssystem gekoppelt ist, und wobei bei dieser Gesamtanordnung das erfindungsgemäße Verfahren ausführbar ist,
FIG. 2 eine einzelne Nebenstellenanlage zeigt, die über das Internet mit dem Daten-Vereinigungssystem gekoppelt ist,
FIG. 3 ein Flussschaubild zur Darstellung der einzelnen Schritte des erfindungsgemäßen Verfahrens gemäß einer bevorzugten Ausführungsform ist und
FIG. 4a und 4b zwischen Kommunikationspartnern ausgetauschte Botschaften im Einzelnen zeigt.

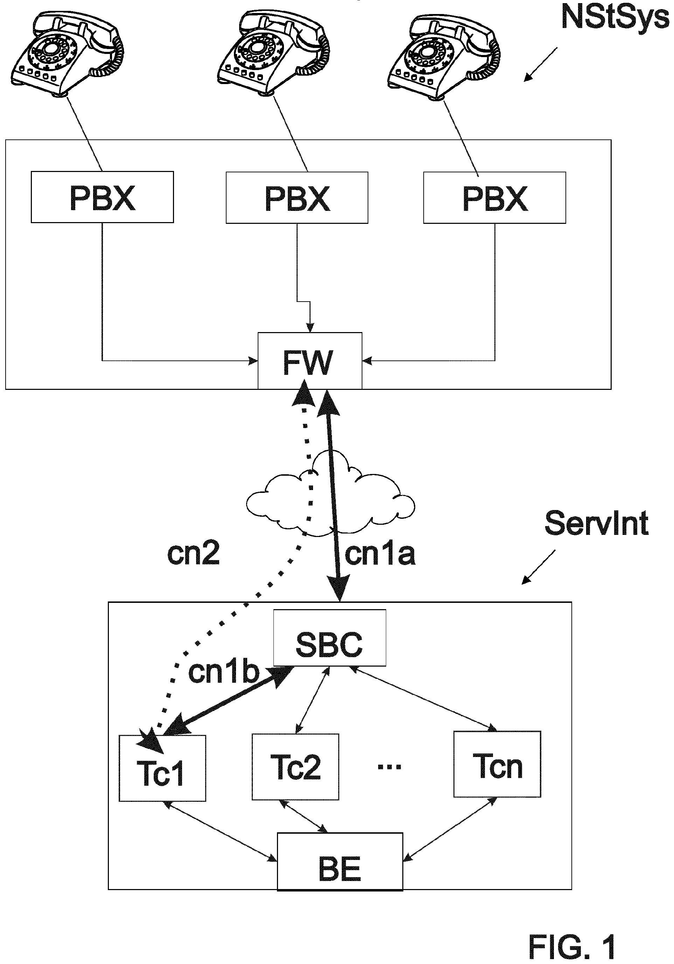

Das in FIG. 1 gezeigte Nebenstellenanlagensystem NStSys umfasst eine Mehrzahl von Nebenstellenanlagen (Private Branch Exchange, vorliegend als PBX abgekürzt), die in der FIG. 1 durch ein Telefonsymbol allgemeiner Art angedeutet sind. Jede Nebenstellenanlage kann über eine Firewall FW (in Form von Softwareeinheiten oder auch als Hardwareelement ausgebildet) mit zusätzlicher NTA-Funktion Zugang zum Internet I erhalten. Vorliegend soll ein Dienste-Vereinigungssystem (Servlnt, für "Services Integration"), wie etwa das System "Circuit" der Unify GmbH & Co. KG, dafür sorgen, dass nicht nur herkömmliche Telefonie stattfindet, sondern auch Computerdaten und andere Kommunikationsmöglichkeiten integriert werden. Das Dienste-Vereinigungssystem Servlnt kann eine Datenverarbeitungszentrale sein, die von dem Anbieter der Plattform für die Dienstevereinigung bereitgestellt wird, oder aber es kann ein Teilnehmer selbst einzelne seiner Rechnerkomponenten bereitstellen und Rechnerkapazitäten nutzen. Vorliegend ist ein Aufbau wie in FIG. 1 gezeigt vorausgesetzt: Die Ankopplung an das Internet I erfolgt über einen Vermittler in Form eines Load Balancers, der im vorliegenden Fall als SBC, Session Border Controller, ausgebildet ist. Der Session Border Controller steuert seinem Namen gemäß die Kommunikation und teilt den verschiedenen Nebenstellenanlagen, die gemeinsam und in unabhängigen Kommunikationsverfahren das Dienste-Vereinigungssystem Servlnt nutzen wollen, einzelne Kommunikationsserver zu, die in FIG. 1 mit"Tc1", "Tc2", "Tcn" durchnummeriert sind, wobei "Tc" für "telephony connector" steht. Die Zahl n kann irgendeine Zahl in einem kleinen oder großen System sein, d. h. einen Wert von zwischen 3 und mehreren Tausend haben. Die Kommunikationsserver untereinander sind über einen "Backend" jeweils bidirektional weiter gekoppelt. Möchte nun eine Nebenstellenanlage PBX Kommunikation unter Nutzung des Dienste-Vereinigungssystems Servlnt ausführen, so wird unter Nutzung des "Session Initiation Protokolls", SIP, ein sogenannter SIP-Trunk erzeugt, d. h. eine Kommunikationsverbindung cn1a, bei der seitens des Nebenstellenanlagensystems NStSys die Internetadresse (IP-Adresse) des SBC aus dem Dienste-Vereinigungssystem Servlnt aufgerufen wird. Der SBC stellt nun die Kommunikation in einem Kommunikationsserver vor, wobei sich der Pfad dann als cn1b innerhalb des Dienste-Vereinigungssystems Servlnt fortsetzt. Der gesamte Kommunikationspfad besteht somit zwischen dem Nebenstellenanlagensystem NStSys und dem Kommunikationsserver aus den Teilpfaden cn1a und cn1b. Hier können bedauerlicherweise nicht sämtliche Services genutzt werden, die prinzipiell von dem Daten-Vereinigungssystem Servlnt zur Verfügung stehen, weil die Kommunikation auf das SIP beschränkt ist. Nachfolgend werden die Schritte erläutert, wie ein zweiter Kommunikationspfad cn2 (in FIG. 1 gestrichelt dargestellt) unmittelbar von dem Nebenstellenanlagensystem NStSys zu dem Kommunikationsserver Tc1 erfolgt: Hierzu muss der Kommunikationsserver Tc1 seine IP-Adresse der Nebenstelle PBX bekanntgeben.

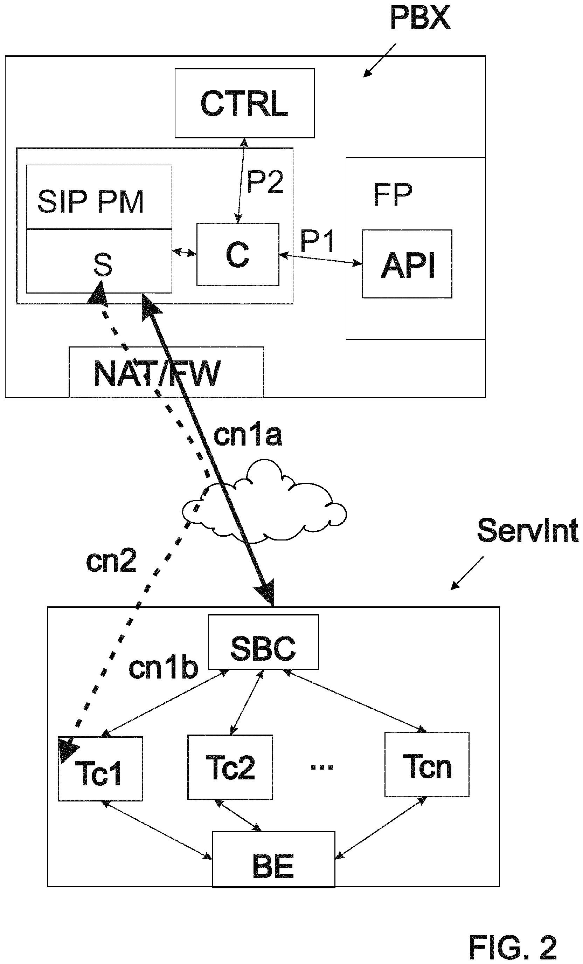

Die im Einzelnen in FIG. 2 genauer gezeigte Nebenstelle PBX umfasst eine Steuereinrichtung CTRL und eine Software FP, die die Vermittlungstechnik bereitstellt (sogenanntes "Feature Processing", wofür FP steht). Möchte man sich auf eine engere Bedeutung beziehen, kann für das "Feature Processing" der Begriff "Call Control" verwendet werden. Innerhalb der FP-Software ist eine API, eine "Application Program Interface" vorgesehen, die wiederum mit einem Controller C kommuniziert, der eine Application S unter Steuerung eines Protokollmanagers SIP PM, der das Protokoll SIP verwendet, kontrolliert. Die Pfeile innerhalb der PBX stehen für Funktionen: Der Pfeil P1 veranschaulicht, dass eine Computer Telephony Integration, CTI, also Integration von Rechner- und Telefonfunktionen, über CSTA (Computer Supported Telecommunications Applications) erfolgt. Zudem kann gemäß Pfeil P2 eine vereinigte Kommunikation ("Unified Communication", UC) über eine Web Service Interface, WSI, erfolgen, wie nachfolgend dargestellt.

Das nachfolgend unter Bezug auf FIG: 3 dargestellte erfindungsgemäße Verfahren beginnt in Schritt S10 damit, dass die PBX über die Einheit API unter Steuerung des Controllers C und unter Nutzung eines SIP-Trunks die Internetadresse der SBCdes Dienste-Vereinigungssystems Servlnt aufruft, d. h. die Internetadresse deren Vermittlers aufruft. Bei solchen Anfragen von einer Nebenstellenanlage PBX teilt der SBC dem Kommunikationsvorgang einen der Kommunikationsserver (Tci, wobei i für eine Zahl zwischen 1 und n steht) zu, dies ist Schritt S12 des erfindungsgemäßen Verfahrens.

Im nächsten Schritt, gemäß S14, teilt die Tci der PBX über den hergestellten Kommunikationspfad (cn1b mit cn1a) ihre gesonderte, eigene IP-Adresse mit, die vorliegend als herkömmlicherweise vergeben angenommen wird oder sonst zuzuteilen ist. Im nachfolgenden Schritt S16 ruft die PBX zusätzlich über das Internet unter Nutzung der soeben mitgeteilten IP-Adresse die Tci unmittelbar auf und stellt den Kommunikationspfad cn2 her. (in FIG. 1 ist die Zahl i beispielhaft mit der Zahl 1 belegt). Dies erfolgt unter Nutzung des Hypertext Transfer Protocol Secure, HTTPS.

Durch geeignete Antwort des Kommunikationsservers Tci geht somit der Aufbau einer WSI-Socket-Verbindung vonstatten, Schritt S18, so dass insgesamt im folgenden Schritt S20 ein Austausch über zwei parallele Kanäle, nämlich den SIP-Trunk cn1a mit cn1b und den WSI-Socket cn2, gegeben ist.

Bei Schritt S22 wird regelmäßig (in kurzer Zeittaktung) geprüft, ob einer der Kanäle verlorengegangen ist (ob also eine Verbindung verloren ist). Alternativ kann überhaupt erst bei Verbindungsverlust zum Schritt S22 übergegangen werden, wobei dann der mit "NEIN" eingeleitete Zweig entfällt. Falls eine Verbindung verlorengegangen ist, so erfolgt gemäß Schritt S24 eine Wiederherstellung der Verbindung unter Nutzung von solchen Daten, die als Statusdaten entweder zuvor zwischen den Kommunikationspartnern Tci und PBX, gegebenenfalls auch unter Vermittlung des SBC, übermittelt bzw. ausgetauscht wurden. Auch können der SBC und der Tci Daten miteinander austauschen, damit die jeweils andere Verbindung wiederherstellbar ist. So kann zur Wiederherstellung der Verbindung cn1a mit cn1b vorgesehen sein, dass im SIP-Header immer wieder oder zumindest einfach Informationen zu der Web Services Verbindung mit der TC-Instanz Richtung Servlnt übermittelt werden. Der sogenannte Web Service Session Identifier wird durch den PBX als optionales Informationselement in einen SIP-Header bzw. beim SIP-Register eingetragen. Auch der SBC muss über die oben genannten SIP-Daten hinaus auch beim WSI/HTTPS-Aufbau des Kommunikationspfades cn2 den eindeutigen Web Service Session Identifier zwischenspeichern. Der SBC kann dann nach einer Unterbrechung des Kommunikationspfads cn1 immer genau die vorherige Instanz adressieren, welche ja in der Regel noch die Web Services Verbindung offenhält.

Genauso kann der PBX in seinem UC-Server CTRL beim Aufbau der Web Services über die HTTPS-Datenverbindung das Dienste-Vereinigungssystem Servlnt den bereits verbundenen SIP-Trunk zwischen PBX und Servlnt eindeutig identifizierbar machen. So kann es beispielsweise eine eindeutige SIP-Trunk-Rufnummer sein, welche sowohl der einen Seite (etwa der Nebenstellenanlage PBX) als auch der anderen Seite (etwa dem Kommunikationsserver TCi oder dem Vermittler SBC) bekannt ist. Dadurch kann die Verbindung zur "richtigen" Telekommunikationsinstanz auch dann aufgebaut werden, wenn diese nicht per direkter Adressierung erfolgen kann, sondern ebenfalls über den SBC erfolgen muss. Der SBC hat in diesem Fall die Zuordnung der individuellen SIP-Trunk-Rufnummer zur spezifischen tc-Instanz Tci Dienste-Vereinigungssystems zwischenzuspeichern.

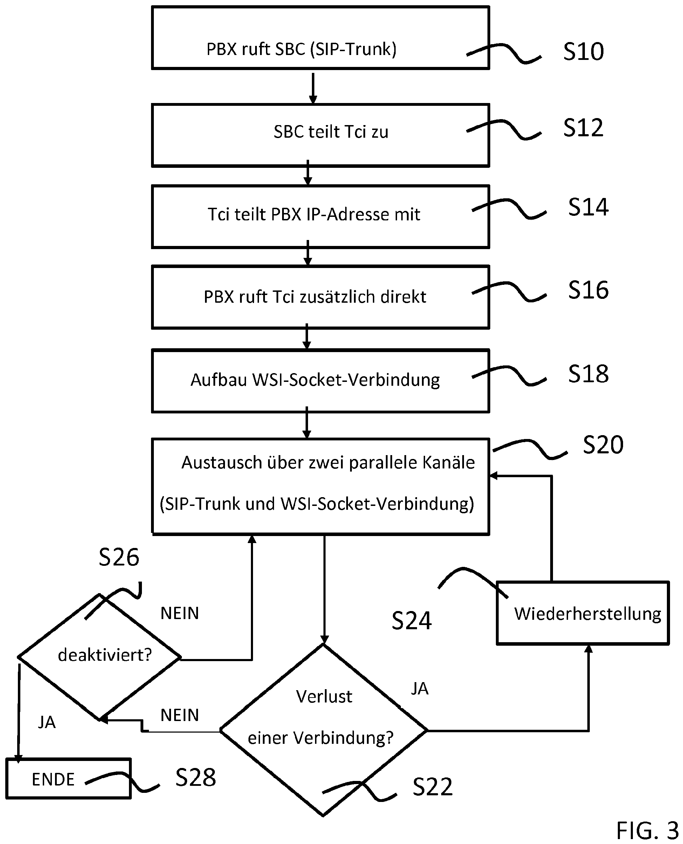

Zurück zum Flussschaubild gemäß FIG. 3 kommend, ist festzustellen, dass nach Verlust der Verbindung diese somit in Schritt S24 bei Gegebensein der vorhandenen Daten wiederherstellbar ist, so dass der Austausch über die beiden parallelen Kanäle gemäß Schritt S20 wieder aufgenommen werden kann. Erfolgt kein Verlust einer Verbindung, so wird gemäß Schritt S26 geprüft, ob die Verbindung durch einen Teilnehmer aktiv beendet werden soll ("Auflegen" beim Telefon), sonst bleibt der Austausch über die beiden parallelen Kanäle cn1a und cn2 bestehen.

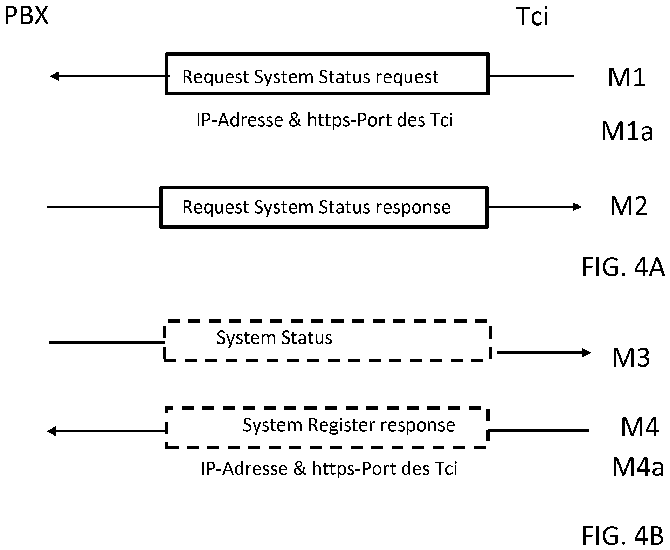

Im Einzelnen ist in den Figuren 4A und 4B veranschaulicht, welche Datenaustauschszenarien notwendig beziehungsweise möglich sind:
Dieser Austausch lehnt sich an den "Third-Party-Link-Aufbau" gemäß der Standard ECMA-269-Variante an, wobei ECMA für "European Computer Manufacturer's Association" steht, eine private, internationale Normungsorganisation:
Eine erste Botschaft M1 wird seitens des von dem Vermittler SBC ausgewählten TCi's zur Nebenstellenanlage PBX ausgesendet. M1 beinhaltet die Anfrage "Request System Status request". Vorliegend ist abweichend von dem Standard ECMA-269 zusätzlich die Nachricht M1a vorgesehen, dass die IP-Adresse und gegebenenfalls auch der HTTPS-Port des Tci's übermittelt wird. Die Nebenstellenanlage PBX antwortet mit der Nachricht M2 "Request System Status response". Nachfolgend erfolgt ab und zu der Austausch von Statusdaten gemäß der Nachricht M3 von der Nebenstellenanlage PBX zum TCi: Nachricht "System Status", worauf die Nachricht M4 zurückgesendet wird: "System Register Response". Hierbei ist abweichend vom ECMA-269 vorgesehen, dass abermals die IP-Adresse und gegebenenfalls der HTTPS-Port des TCi's bekanntgegeben werden. Die Nachrichten M3, M4, M4a sind optional, können aber auf Wunsch regelmäßig in vorbestimmten Zeitabständen oder bei Gegebensein vorbestimmter Bedingungen gesendet werden. Die vorbestimmten Bedingungen können beispielsweise beinhalten, dass die Kommunikationsqualität gemäß einem Kriterium "QoS", "Quality of Service", unter eine bestimmte Grenze gesunken ist, oder dergleichen.

Der Pfeil P1 steht dafür, dass innerhalb der SIP-Trunk-Verbindung CSTA-Daten in dem SIP getunnelt werden. Der Pfeil P2 in FIG. 2 steht dafür, dass WSI-Daten bei der Verbindung CN2 mit den HTTPS-Daten übermittelt werden, also auch in diesen getunnelt werden.

Es wurde gezeigt, wie eine WSI-Socket-Verbindung zwischen einer Nebenstellenanlage (etwa gemäß OpenScape Business) mit einem Dienste-Vereinigungssystem ("Circuit" der Unify GmbH & Co. KG) erfolgen kann, das heißt hier also insbesondere, wie der Datenverkehr auf SIP reduziert werden kann und trotzdem die erforderlichen CTI- und UC-Dienste des WSI der Nebenstellenanlage für den Client des Dienste-Vereinigungssystems zur Verfügung stehen.

Zusammenfassend lässt sich formulieren, dass das Konzept in der näheren Ausgestaltung vorsieht, dass über den SIP/CTI-Link hinaus eine zusätzliche, unabhängige Webservices-Datenverbindung hergestellt wird, über welche UCspezifische Services (z.B. Präsenzstatussynchronisation) realisiert werden.

Zur näheren Ausgestaltung gehört auch Folgendes:
Es ist hierbei zwingend sicherzustellen, dass beidseitig die "richtigen" Endpunkte miteinander verbunden werden - auf der Seite des Dienste-Vereinigungssystems ("Circuit-Seite") ist dies immer diejenige TC-Instanz, welche der Vermittler (Load Balancer) beim urspünglichen SIP-Verbindungsaufbau ausgewählt hat. Dieser TC muss auch für den initialen WSI-Socket adressiert werden. Auf der Seite der Nebenstellenanlage (OpenScape Business) sind dies die Telefonie-Applikation (Call Control) einerseits und der integrierte UC-Server andererseits.

In der Praxis ergeben sich dabei die Herausforderungen, dass wenn
1) auf einem Server mehrere TC-Instanzen betrieben werden, eine IP-Adressierung mit festem Web Services Port selbst dann nicht ausreicht, wenn der Nebenstellenanlage diese IP-Adresse bekannt ist und wenn es sich um eine direkt adressierbare Public IP-Adresse handelt, und
2) der Load Balancer aus Performancegründen keine Stateful Packet Inspection im SIP- beziehungsweise WSI-Protokoll durchführen kann, um die beiden Socketverbindungen logisch zusammenzuführen beziehungsweise um den zweiten Verbindungsaufbau zu genau der richtigen, zugehörigen Instanz des Telephony Connectors, welcher bereits die erste Verbindung verwaltet, durchzuführen.

Durch die beiden getrennten Verbindungsäste wird die telefoniespezifische EchtzeitKommunikation (SIP) transporttechnisch sauber von der UC-spezifischen Kommunikation entkoppelt, und lastbedingte Latenzeffekte auf der Seite der SIP-Kommunikation werden vermieden.

Diese Erfindung beziehungsweise deren nähere Ausgestaltung macht sich den Umstand zunutze, dass für den Aufbau und die Aufrechterhaltung des CTI-Links zwischen der Nebenstellenanlage (OpenScape Business) und dem SBC/TC SIP Notify Meldungen verwendet werden (sog. "Unsolicited Notify"), die CSTA in XML übertragen (können).

## Patentansprüche

1. Verfahren zum Bereitstellen von Verbindungsherstellungsdaten (M1a, M4a) zwischen einer Nebenstellenanlage, PBX, in einem ersten Kommunikationssystem (NStSys), welches anhand von IP-Adressen mit einem ersten Kommunikationsprotokoll, SIP, auf Kommunikationspartner (Tci) zugreift, und einem Kommunikationsserver (TC1, TC2, ... , TCn) der in einem als Dienste-Vereinigungssystem (ServInt) ausgebildeten zweiten Kommunikationssystem nur über die IP-Adresse eines Kommunikationsdaten zuteilenden Vermittlers, SBC, zugänglich ist, wobei der Vermittler mittels einer IP-Adresse unter Verwendung des ersten Kommunikationsprotokolls aufrufbar ist, wobei bei dem Verfahren die Nebenstellenanlage, PBX, P&e unter Verwendung des ersten Kommunikationsprotokolls, SIP, an die erste IP-Adresse eine Anfrage nach einer Verbindung sendet (S10) und der Vermittler, SBC, die Verbindung zu dem Kommunikationsserver herstellt (S12),
**dadurch gekennzeichnet, dass** der Kommunikationsserver (TCi) oder der Vermittler, SBC, veranlasst, dass eine IP-Adresse des Kommunikationsservers (TCi), die von der IP-Adresse des Vermittlers, SBC, verschieden ist, der Nebenstellenanlage, PBX, bekannt wird.

2. Verfahren nach Anspruch 1, **dadurch gekennzeichnet, dass** zusätzlich zu der IP-Adresse des Kommunikationsservers (TCi) diese auch die Information an die Nebenstelle übermittelt, über welchen Serverport des Vermittlers dieser Kommunikationsserver (TCi) zugänglich ist.

3. Verfahren nach Anspruch 1 oder 2, **dadurch gekennzeichnet, dass** nach Bekanntgabe der IP-Adresse des betreffenden Kommunikationsservers (TCi) und gegebenenfalls des Serverports die Nebenstellenanlage, PBX, unter Verwendung eines zweiten Kommunikationsprotokolls, HTTPS, eine Anfrage zur Herstellung einer Verbindung an die IP-Adresse des Kommunikationsservers (TCi) sendet (S16) und die Verbindung hergestellt wird (S18).

4. Verfahren nach einem der vorhergehenden Ansprüche, **dadurch gekennzeichnet, dass** nach Abbruch der das erste Kommunikationsprotokoll, SIP, nutzenden Verbindung (cn1a) und bei Weiterbestehen der das zweite Kommunikationsprotokoll, HTTPS, nutzenden Verbindung (cn2) unter vorbestimmten Bedingungen eine Wiederherstellung der das erste Kommunikationsprotokoll nutzenden Verbindung erfolgt (S24).

5. Verfahren nach einem der vorhergehenden Ansprüche, **dadurch gekennzeichnet, dass** der Kommunikationsserver (Tci) unter vorbestimmten Bedingungen auch eine von der IP-Adresse verschiedene zweite Adresse bekanntgibt, um zu einem späteren Zeitpunkt ein Herstellen einer Verbindung mit einer Nebenstellenanlage, PBX, direkt von dem Vermittler verbunden zu werden, wenn der Kommunikationsserver (Tci) von der Nebenstellenanlage, PBX, mit der zweiten Adresse bei dem Vermittler, SBC, angefragt wird.

6. Verfahren nach einem der vorhergehenden Ansprüche, **dadurch gekennzeichnet, dass** Statusdaten des Kommunikationsservers (Tci) von dem Kommunikationsserver (Tci) an die Nebenstellenanlage, PBX, gesendet werden, und/oder, dass Statusdaten des Kommunikationsservers (Tci) von dem Vermittler, SBC, an die Nebenstellenanlage, PBX, gesendet werden, und/oder, dass Statusdaten des Vermittlers von dem Vermittler, SBC, an die Nebenstellenanlage, PBX, gesendet werden, und/oder, dass Statusdaten des Vermittlers, SBC, über den Kommunikationsserver (Tci) an die Nebenstellenanlage, PBX, gesendet werden, und/oder, dass Statusdaten von der Nebenstellenanlage, PBX, direkt an den Kommunikationsserver (Tci) gesendet werden, und/oder dass Statusdaten von der Nebenstellenanlage, PBX, direkt an den Vermittler, SBC, gesendet werden, und/oder, dass Statusdaten der Nebenstellenanlage, PBX, über den Vermittler, SBC, an den Kommunikationsserver (Tci) gesendet werden, und/oder, dass Statusdaten von der Nebenstellenanlage, PBX, über den Kommunikationsserver (Tci) an den Vermittler, SBC, gesendet werden.

7. Verfahren nach einem der vorhergehenden Ansprüche, **dadurch gekennzeichnet, dass** das erste Kommunikationsprotokoll das Session Initiation Protocol, SIP, ist.

8. Verfahren nach Anspruch 7, **dadurch gekennzeichnet, dass** in einem SIP-Trunk Nachrichten von computergestützten Telefonanwendungen Computer-Supported Telecommunications Applications, CSTA, getunnelt werden.

9. Verfahren nach einem der vorhergehenden Ansprüche, **dadurch gekennzeichnet, dass** das zweite Kommunikationsprotokoll das Hypertext Transfer Protocol Secure, HTTPS, ist.

10. Verfahren nach Anspruch 9, **dadurch gekennzeichnet, dass** in den HTTPS-Daten Nachrichten des Web Service Interface, WSI, getunnelt werden, so dass eine WSI-Socket-Verbindung erzeugt wird.

11. Anordnung (Servlnt) mit einer Mehrzahl von Kommunikationsservern (Tc1, Tc2, ..., Tcn) und einem Vermittler, SBC, über den gemäß einem ersten Kommunikationsprotokoll ,SIP' auf den Kommunikationsserver (TCi) zugreifbar ist, wobei die Kommunikationsserver (Tc1, Tc2, ... , Tcn) bei Nutzung des ersten Kommunikationsprotokolls,SIP, ihre eigene IP-Adresse verborgen halten, **dadurch gekennzeichnet, dass** zumindest ein erster der Kommunikationsserver oder der Vermittler ausgelegt ist, die IP-Adresse des ersten Kommunikationsservers für Anwendungen eines von dem ersten Kommunikationsprotokoll, SIP, verschiedenen zweiten Kommunikationsprotokolls, HTTPS, an einen Kommunikationspartner, PBX, der auf ihn über den Vermittler, SBC, zugreift, bekanntzugeben.

12. Anordnung nach Anspruch 11, **dadurch gekennzeichnet, dass** zumindest der erste Kommunikationsserver (Tci) ausgelegt ist, unter Verwendung des zweiten Kommunikationsprotokolls, HTTPS, mit dem Kommunikationspartner an dem Vermittler vorbei (CN2) Daten auszutauschen, vorzugsweise zusätzlich zu über den Vermittler unter Nutzung des ersten Kommunikationsprotokolls (cn1a, cn1b) ausgetauschten Daten.

13. Anordnung nach Anspruch 11 oder 12, **dadurch gekennzeichnet, dass** der Vermittler als Load Balancer, insbesondere als Session Border Controller, SBC, ausgelegt ist.

14. Anordnung nach einem der Ansprüche 11 bis 13, **dadurch gekennzeichnet, dass** das erste Kommunikationsprotokoll das Session Initiation Protocol, SIP, ist, und ein SIP-Trunking erfolgt, um eine Kommunikationsverbindung mit der Anordnung herzustellen.

15. Anordnung nach einem der Ansprüche 11 bis 14, **dadurch gekennzeichnet, dass** das zweite Protokoll das Hypertext Transfer Protocol Secure, HTTPS, ist, und dass mittels des HTTPS eine Web Service Interface, WSI-Socket-Verbindung erzeugt wird.

## Claims

1. Method for providing connection establishment data (M1a, M4a) between a private branch exchange, PBX, in a first communication system (NStSys) which accesses communication partners (Tci) on the basis of IP addresses with a first communication protocol, SIP, and a communication server (TC1, TC2, ..., TCn) which is accessible in a second communication system configured as a service unification system (Servlnt) only via the IP address of an intermediary, SBC, which allocates communication data, wherein the intermediary is retrievable by means of an IP address using the first communication protocol, in which method the private branch exchange, PBX, sends a request for a connection to the first IP address using the first communication protocol, SIP, (S10) and the intermediary, SBC, establishes the connection to the communication server (S12), **characterized in that** the communication server (TCi) or the intermediary, SBC, initiates that an IP address of the communication server (TCi) which is different from the IP address of the intermediary, SBC, become known to the private branch exchange, PBX.

2. Method according to claim 1, **characterized in that** in addition to the IP address of the communications server (TCi) this also transmits the information to the auxiliary station via which server port of the intermediary this communications server (TCi) is accessible.

3. Method according to claim 1 or 2, **characterized in that** after disclosure of the IP address of the relevant communications server (TCi) and, if applicable, of the server port , the private branch exchange, PBX, sends a request for establishing a connection to the IP address of the communications server (TCi) using a second communications protocol, HTTPS, (S16) and the connection is established (S18).

4. Method according to one of the preceding claims, **characterized in that** after the connection (cn1a) using the first communication protocol, SIP, is terminated and if the connection (cn2) using the second communication protocol, HTTPS, is maintained under predetermined conditions, the connection using the first communication protocol is re-established (S24).

5. Method according to any one of the preceding claims, **characterized in that** the communication server (Tci), under predetermined conditions, also discloses a second address different from the IP address in order to be connected at a later time to a private branch exchange, PBX, directly by the intermediary, when the communication server (Tci) is requested by the private branch exchange, PBX, with the second address at the intermediary, SBC.

6. Method according to any of the preceding claims, **characterized in that** status data of the communication server (Tci) are sent from the communication server (Tci) to the private branch exchange, PBX, and/or that status data of the communication server (Tci) are sent from the intermediary, SBC, to the private branch exchange, PBX, and/or that status data of the intermediary are sent from the intermediary, SBC, to the private branch exchange, PBX, and/or that status data of the intermediary, SBC, are sent via the communications server (Tci) to the private branch exchange, PBX, and/or that status data of the private branch exchange, PBX, are sent directly to the communications server (Tci), and/or that status data of the private branch exchange, PBX, are sent directly to the intermediary, SBC, and/or that status data of the private branch exchange, PBX, are sent to the communications server (Tci) via the intermediary, SBC, and/or that status data of the private branch exchange, PBX, are sent to the intermediary, SBC, via the communications server (Tci).

7. Method according to any of the preceding claims, **characterized in that** the first communication protocol is the Session Initiation Protocol, SIP.

8. Method according to claim 7, **characterized in that** in a SIP trunk, messages from Computer-Supported Telecommunications Applications, CSTA, are tunneled.

9. Method according to any of the preceding claims, **characterized in that** the second communication protocol is the Hypertext Transfer Protocol Secure, HTTPS.

10. Method according to claim 9, **characterized in that** in the HTTPS data, messages of the Web Service Interface, WSI, are tunneled, so that a WSI socket connection is created.

11. Arrangement (Servlnt) comprising a plurality of communication servers (Tc1, Tc2, ..., Tcn) and an intermediary, SBC, via which the communication server (Tci) is accessible according to a first communication protocol, SIP, wherein the communication servers (Tc1, Tc2, ..., Tcn) keep their own IP address hidden when using the first communication protocol, SIP, **characterized in that** at least a first one of the communication servers or the intermediary is configured to disclose the IP address of the first communication server for applications of a second communication protocol, HTTPS, different from the first communication protocol, SIP, to a communication partner, PBX, which accesses it via the intermediary, SBC.

12. Arrangement according to claim 11, **characterized in that** at least the first communication server (Tci) is configured to exchange data with the communication partner passing the intermediary (CN2) using the second communication protocol, HTTPS, preferably in addition to data exchanged via the intermediary using the first communication protocol (cn1a, cn1b).

13. Arrangement according to claim 11 or 12, **characterized in that** the intermediary is configured as a load balancer, in particular as a Session Border Controller, SBC.

14. Arrangement according to any of claims 11 to 13, **characterized in that** the first communication protocol is the Session Initiation Protocol, SIP, and SIP trunking is performed to establish a communication link with the arrangement.

15. Arrangement according to any one of claims 11 to 14, **characterized in that** the second protocol is the Hypertext Transfer Protocol Secure, HTTPS, and **in that** a Web Service Interface, WSI socket connection is created by means of the HTTPS.

## Revendications

1. Procédé de mise à disposition de données d'établissement de connexion (M1a, M4a) entre un autocommutateur privé, PBX, dans un premier système de communication (NStSys), qui accède à des partenaires de communication (Tci) à l'aide d'adresses IP avec un premier protocole de communication, SIP, et un serveur de communication (TC1, TC2, ... , TCn) qui est accessible dans un deuxième système de communication conçu comme un système d'association de services (Servlnt) uniquement par l'intermédiaire de l'adresse IP d'un commutateur, SBC, attribuant des données de communication, le commutateur pouvant être appelé au moyen d'une adresse IP en utilisant le premier protocole de communication, procédé dans lequel l'autocommutateur privé, PBX, envoie à la première adresse IP une demande de connexion (S10) en utilisant le premier protocole de communication, SIP, et le commutateur, SBC, établit la connexion avec le serveur de communication (S12), **caractérisé en ce que** le serveur de communication (TCi) ou le commutateur, SBC, fait en sorte qu'une adresse IP du serveur de communication (TCi) différente de l'adresse IP du commutateur, SBC, soit connue de l'autocommutateur privé, PBX.

2. Procédé selon la revendication 1, **caractérisé en ce que,** en plus de l'adresse IP du serveur de communication (TCi), celui-ci transmet également à la station secondaire l'information concernant le port de serveur du commutateur par lequel ce serveur de communication (TCi) est accessible.

3. Procédé selon la revendication 1 ou 2, **caractérisé en ce que,** après la communication de l'adresse IP du serveur de communication (TCi) concerné et, le cas échéant, du port de serveur, l'autocommutateur privé, PBX, envoie une demande d'établissement d'une connexion à l'adresse IP du serveur de communication (TCi) en utilisant un deuxième protocole de communication, HTTPS, (S16) et la connexion est établie (S18).

4. Procédé selon l'une des revendications précédentes, **caractérisé en ce que,** après l'interruption de la connexion (cn1a) utilisant le premier protocole de communication, SIP, et en cas de maintien de la connexion (cn2) utilisant le deuxième protocole de communication, HTTPS dans des conditions prédéterminées, une restauration de la connexion utilisant le premier protocole de communication est effectuée (S24).

5. Procédé selon l'une des revendications précédentes, **caractérisé en ce que** le serveur de communication (Tci) communique également, dans des conditions prédéterminées, une deuxième adresse différente de l'adresse IP pour être connecté directement par le commutateur à un moment ultérieur avec un autocommutateur privé, PBX, lorsque le serveur de communication (Tci) est demandé au commutateur, SBC, avec la deuxième adresse par l'autocommutateur privé, PBX.

6. Procédé selon l'une des revendications précédentes, **caractérisé en ce que** des données relatives à l'état du serveur de communication (Tci) sont envoyées par le serveur de communication (Tci), à l'autocommutateur privé, PBX, et/ou **en ce que** des données relatives à l'état du serveur de communication (Tci) sont envoyées par le commutateur, SBC, à l'autocommutateur privé, PBX, et/ou que des données relatives à l'état du commutateur sont envoyées par le commutateur, SBC, à l'autocommutateur privé, PBX, et/ou que des données relatives à l'état du commutateur, SBC, sont envoyées via le serveur de communication (Tci) à l'autocommutateur privé, PBX, et/ou que des données relatives à l'état de l'autocommutateur privé, PBX, sont envoyées directement au serveur de communication (Tci), et/ou que des données relatives à l'état de l'autocommutateur privé, PBX, sont envoyées directement au commutateur, SBC, et/ou que des données relatives à l'état de l'autocommutateur privé, PBX, sont envoyées au serveur de communication (Tci) via le commutateur, SBC, et/ou que des données relatives à l'état de l'autocommutateur privé, PBX, sont envoyées au commutateur, SBC, via le serveur de communication (Tci).

7. Procédé selon l'une des revendications précédentes, **caractérisé en ce que** le premier protocole de communication est le protocole d'initiation de session, SIP.

8. Procédé selon la revendication 7, **caractérisé en ce que,** dans un trunk SIP, des messages d'applications téléphoniques assistées par ordinateur, Computer-Supported Telecommunications Applications, CSTA, sont tunnellisés.

9. Procédé selon l'une des revendications précédentes, **caractérisé en ce que** le deuxième protocole de communication est le Hypertext Transfer Protocol Secure, HTTPS.

10. Procédé selon la revendication 9, **caractérisé en ce que,** dans les données HTTPS, des messages de l'interface de service web, WSI, sont tunnellisés, de sorte qu'une connexion de socket WSI est générée.

11. Dispositif (Servlnt) comprenant une pluralité de serveurs de communication (Tc1, Tc2, ..., Tcn) et un commutateur, SBC, par l'intermédiaire duquel on peut accéder au serveur de communication (Tci) selon un premier protocole de communication "SIP", les serveurs de communication (Tc1, Tc2, ..., Tcn) gardant leur propre adresse IP cachée lors de l'utilisation du premier protocole de communication, SIP, **caractérisé en ce que** au moins un premier des serveurs de communication ou bien le commutateur est conçu pour communiquer l'adresse IP du premier serveur de communication pour des applications d'un deuxième protocole de communication, HTTPS, différent du premier protocole de communication, SIP, à un partenaire de communication, PBX, qui y accède via le commutateur, SBC.

12. Dispositif selon la revendication 11, **caractérisé en ce que** au moins le premier serveur de communication (Tci) est conçu pour échanger des données avec le partenaire de communication en passant par le commutateur (CN2) en utilisant le deuxième protocole de communication, HTTPS, de préférence en plus des données échangées via le commutateur en utilisant le premier protocole de communication (cn1a, cn1b).

13. Dispositif selon la revendication 11 ou 12, **caractérisé en ce que** le commutateur est conçu comme un équilibreur de charge, en particulier comme un contrôleur de frontière de session, Session Border Controller, SBC.

14. Dispositif selon l'une des revendications 11 à 13, **caractérisé en ce que** le premier protocole de communication est le protocole d'initiation de session, SIP, et un trunking SIP est effectué pour établir une liaison de communication avec le dispositif.

15. Dispositif selon l'une des revendications 11 à 14, **caractérisé en ce que** le deuxième protocole est le Hypertext Transfer Protocol Secure, HTTPS, et **en ce qu'**une connexion de type Web Service Interface, WSI-Socket est générée au moyen du HTTPS.
